# EUROPÄISCHE PATENTSCHRIFT

(11) **EP 1 317 581 B1**
(45) Veröffentlichungstag und Bekanntmachung des Hinweises auf die Patenterteilung: **15.11.2006**
(21) Anmeldenummer: 01982236.0
(22) Anmeldetag: 01.09.2001
(51) Int. Cl.: E01B 25/00, B60L 13/00

(54) **TRÄGER FÜR EIN SPURGEFÜHRTES HOCHGESCHWINDIGKEITSFAHRZEUG**
SUPPORT FOR A TRACK-GUIDED HIGH-SPEED VEHICLE
SUPPORT POUR UN VEHICULE A GRANDE VITESSE GUIDE

(30) Priorität: 12.09.2000 DE 10045336; 22.12.2000 DE 10064724; 13.03.2001 DE 10111918; 30.04.2001 DE 10120909; 12.07.2001 DE 10133337; 12.07.2001 DE 10133318; 12.07.2001 DE 10133316
(43) Veröffentlichungstag der Anmeldung: 11.06.2003
(73) Patentinhaber: Max Bögl Bauunternehmung GmbH & Co. KG, 92301 Neumarkt (DE)
(72) Erfinder: REICHEL, Dieter, D-92318 Neumarkt (DE); FEIX, Jürgen, D-82110 Germering (DE)
(74) Vertreter: Bergmeier, Werner
(86) Internationale Anmeldenummer: PCT/EP2001/010099
(87) Internationale Veröffentlichungsnummer: WO 2002/022956

(56) Entgegenhaltungen:
- EP-A- 0 987 370
- DE-A- 4 115 936
- US-A- 5 850 794

## Beschreibung

Die vorliegende Erfindung betrifft einen Träger für ein spurgeführtes Hochgeschwindigkeitsfahrzeug, insbesondere eine Magnetschwebebahn, wobei der Träger in Abständen auf Pfeilern gelagert ist und an dessen Außenseiten Funktionselemente zum Führen des Fahrzeuges angeordnet sind, gemäß Oberbegriff des Anspruchs 1.

Aus der DE 41 15 935 C2 ist beispielsweise eine Fahrwegkonstruktion für Magnetschwebefahrzeuge bekannt, bei welcher an einem Träger nach innen gerichtete Ausrüstungsteile zum Führen des Fahrzeugs vorgesehen sind. Der Träger selbst ist im Querschnitt U-förmig ausgebildet. Der Träger ist auf Pfeilern gelagert, Wobei zur besseren Aufnahme des Trägers Halterungen vorgesehen sind, in welchen die Träger liegen. Die Halterungen umgreifen den U-förmigen Querschnitt von außen und stabilisieren somit den Träger. Die Halterungen selbst sind wiederum auf Lagerstellen auf den Pfeilern gelagert. Nachteilig bei einer derartigen Fahrwegkonstruktion ist es, daß der Träger durch die offene Trägerkonstruktion eine relativ hohe Elastizität aufweist. Obwohl die Ausrüstungsteile sehr exakt zueinander angeordnet sein müssen, um das Fahrzeug führen zu können, ist durch die Konstruktion dieses Fahrwegs nur mit Hilfe der Halter eine ausreichende Stabilisierung des Trägers und Positionierung der Ausrüstungsteile möglich.

Aus der DE 38 25 508 C1 ist ein Fahrweg bekannt, welcher aus einem hohlen, im wesentlichen T-förmigen Träger besteht. An den Außenseiten des Obergurtes des Trägers sind die Funktionselemente zum Führen des Magnetschwebefahrzeuges angeordnet. Der Träger selbst ist wiederum auf einzelnen Pfeilern gelagert, wobei die Pfeiler Halterungen aufweisen, welche die Basis des Trägers umgreifen. Nachteilig bei einem derartigen Träger ist es, das er durch die Konstruktion bedingt zwar exakter die Funktionselemente zueinander positioniert als bei einem Fahrweg aus der DE 41 15 935 C1, aber trotzdem eine immer noch nicht gute Verwindungssteifigkeit aufweist. Dies wirkt sich insbesondere bei extremen Hachgeschwindigkeiten des Fahrzeugs, beispielsweise bei über 500 km/h in Form eines manchmal unruhigen Laufes des Fahrzeuges aus.

Aus der EP 0 987 370 A1 ist eine Fahrbahn für eine Magnetschwebebahn bekannt. Die Fahrbahn besteht aus einem Träger an dem Anbauteile angeordnet sind. Der Träger ist ein Betonfertigteil, welches mittels Auflagerkonsolen, die an den Enden des Trägers angeordnet sind, auf Stützen bzw. Pfeilern befestigt ist. In Längsrichtung weist der Träger selbst, abgesehen von den Auflagerkonsolen, keine Querschnittsveränderung auf. Nachteilig bei diesem Träger ist es, daß bei einer Überfahrt des Fahrzeuges an dem Pfeiler starke Verwirbelungen entstehen.

Bei oben beschriebenen Ausführungsformen des Standes der Technik ist es nachteilig, daß insbesondere bei den genannten besonders hohen Geschwindigkeiten moderner Magnetschwebebahnfahrzeuge der Strömungswiderstand der Träger und deren Lagerungen einen ruhigen Lauf der Fahrzeuge behindern. Insbesondere die Halter der Träger oder die Pfosten, auf welchen die Träger gelagert sind, bewirkten regelmäßig Stöße auf das Fahrzeug, wenn die verdrängte Luft auf deren Widerstand stößt.

Aufgabe der vorliegenden Erfindung ist es somit, durch eine entsprechende Gestaltung der Träger für Hochgeschwindigkeitsbahnen für einen ruhigen und komfortablen Lauf der Hochgeschwindigkeitsfahrzeuge zu sorgen.

Die Aufgabe wird gelöst durch die Merkmale des Anspruchs 1.

Ist die Außenfläche des Trägers in Bezug auf das Fahrzeug strömungsgünstig ausgebildet, indem in Längsrichtung des Trägers gesehen im wesentlichen keine Querschnittsveränderung des Trägers vorgesehen ist und die Gestaltung des Trägers die Pfeiler gegenüber dem Fahrzeug weitgehend abdeckt, so wird in vorteilhafter Weise bewirkt, daß die von dem Fahrzeug verdrängte Luft gleichmäßig abströmen kann und somit eine ruhige Fahrt des Fahrzeugs gewährleistet. Durch die Gestaltung des Trägers wird zudem eine höhere Quersteifigkeit des Trägers erzielt, wodurch ebenfalls ein gleichmäßiger, komfortabler Lauf des Fahrzeugs bewirkt wird. Dadurch, daß der Querschnitt des Trägers weitgehend gleichbleibend gestaltet ist, werden keine Strömungsstöße auf das Fahrzeug verursacht. Die gleichmäßige Strömung wird erfindungsgemäß auch dadurch erzielt, daß die Pfeiler gegenüber dem Fahrzeug abgedeckt sind und somit die Lagerung des Trägers die Abströmung der durch das Fahrzeug verdrängten Luft nicht stört. Auch hierdurch wird der gleichmäßige Lauf des Fahrzeugs unterstützt.

Der Träger ist erfindungsgemäß derart gestaltet, daß er einen Untergurt aufweist, welcher,den Pfeiler überdeckt oder strömungsgünstig abdeckt. Hierdurch wird bereits durch die Gestaltung der Grundform des Trägers die Strömung an dem Pfeiler vorbeigeleitet. Zusätzlich oder alternativ kann es vorteilhaft sein, wenn der Träger eine den Pfeiler im wesentlichen überdeckende und/oder strömungsgünstig angeordnete oder gestaltete Auflagerkonsole aufweist.

Vorteilhaft ist es, wenn der Träger wenigstens eine Öffnung zur Inspektion des Hohlraumes des Trägers aufweist. Hierdurch wird bei den regelmäßig zu erfolgenden Inspektionen des Trägers die Zugänglichkeit und Überprüfung der Zuverlässigkeit des Trägers erleichtert. Außerdem kann durch die Öffnung Personal in das Innere des Trägers einsteigen und dort für den Betrieb des Fahrzeugs abhängige und unabhängige Versorgungsleitungen und/oder Kommunikationsleitungen verlegen und warten. Durch diese Nutzung des Hohlraums des Trägers kann eine sehr kostengünstige Verlegung von Leitungen erfolgen. Auch Leitungen, welche nichts mit dem Betrieb des Fahrzeugs zu tun haben, können an der bereits vorhandenen Trasse des Hochgeschwindigkeitsfahrzeugs mit verlegt werden und somit eine besonders kostengünstige Verlegeart gewähren. Es kann somit vermieden werden, daß separate Träger beispielsweise für Kommunikationsleitungen installiert oder diese Leitungen separat im Boden verlegt werden müssen.

Vorteilhafterweise weist der Träger einen strömungsgünstigen Lichtraum zur Aufnahme der die Funktionselemente umgreifenden Führungselemente des Fahrzeugs auf. Der Lichtraum ist dabei ebenfalls wie der Träger im Auflagerbereich ohne wesentliche Querschnittsänderungen ausgebildet. Hierdurch wird auch die Abströmung der Luft positiv beeinflußt. Darüber hinaus wird ein im wesentlichen I-förmiger Träger geschaffen, welcher eine besonders hohe Stabilität, Verwindungssteifigkeit und Tragfähigkeit aufweist.

Die Lagerung des Trägers auf dem Pfeiler ist vorzugsweise so, daß Lagerelemente an dem Untergurt des Trägers angeordnet sind. Die Lagerelemente sowie der Pfeiler werden hierdurch mittels des über den Pfeiler hinausragenden Untergurtes abgedeckt. Strömungsstöße werden hierdurch vermieden.

Eine besonders vorteilhafte Herstellungsweise des Trägers besteht darin, daß der Träger aus Beton, insbesondere aus einem Betonfertigteil hergestellt ist. Hierdurch ist eine sehr präzise und fehlerfreie Herstellung der Träger in Ferfigungshallen möglich. Eine Abhängigkeit beispielsweise von der Witterung beim Herstellen des Trägers aus Ortbeton wird hierdurch vermieden.

Um eine besonders hohe Stabilität des Trägers .zu erreichen, ist es vorteilhaft, wenn der Untergurt breiter als der Obergurt ausgebildet ist.

Zur Aussteifung des Trägers ist es vorteilhaft, wenn er ein Schott oder Vouten aufweist. Die Querschnittsform des Trägers kann dadurch bei gleicher Steifigkeit des Trägers kleiner bemessen werden. Sind in dem Träger Vouten angeordnet, so ist neben der Aussteifung auch eine einfache Verankerungsmöglichkeit für Spannglieder geschaffen.

In Kurvenbereichen bildet der Träger vorteilhafterweise eine Raumkurve ab, indem der Träger um dessen Längsachse verdreht gelagert ist und durch Verlängerung und/oder Verkürzung der Kragarme ein Radius gebildet wird.

Eine weitere Möglichkeit der Abbildung der besteht darin, daß der Obergurt des Trägers um dessen Längsachse verdreht ausgebildet ist und durch Verlängerung und/oder Verkürzung der Kragarme ein Radius gebildet wird.

Eine Raumkurve des Trägers in Kurvenbereichen ist auch dadurch abzubilden, indem Befestigungskonsolen der Funktionselemente im Verlauf der Längsachse des Trägers höhenversetzt angeordnet sind und durch Verlängerung und/oder Verkürzung der Befestigungskonsolen ein Radius gebildet wird.

Ist der Hohlraum des Trägers unten offen, wodurch der Untergurt zweiteilig ausgebildet ist, so wird ein sehr leichter und kostengünstiger Träger geschaffen, der häufig die geforderten Anforderungen hinsichtlich der Steifigkeit des Trägers erfüllen kann.

Weist der Hohlraum des Trägers Schotten auf, so wird der Träger zusätzlich versteift:

Weitere Vorteile sind den Ausführungsbeispielen zu entnehmen. Es zeigt
- **Figur 1**: einen Querschnitt durch einen erfindungsgemäßen Träger,
- **Figur 2**: einen Querschnitt durch einen erfindungsgemäßen überhöhten Träger,
- **Figur 3**: einen weiteren Querschnitt durch einen erfindungsgemäßen Träger,
- **Figur 4**: einen Querschnitt durch einen erfindungsgemäßen Träger für ein Kurvenstück,
- **Figur 5**: einen weiteren Querschnitt durch einen erfindungsgemäßen Träger für ein Kurvenstück,
- **Figur 6**: eine perspektivische Ansicht eines erfindungsgemäßen Trägers,
- **Figur 7**: eine perspektivische Ansicht eines weiteren erfindungsgemäßen Trägers.

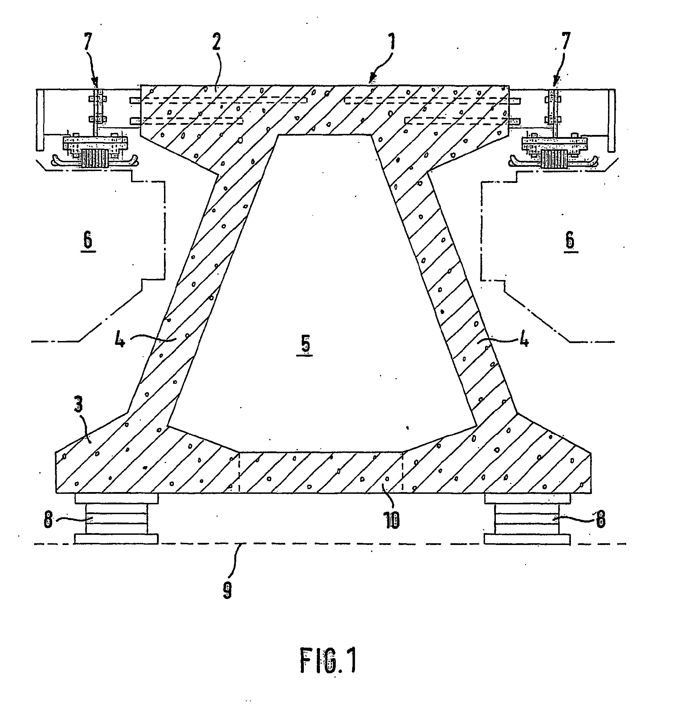

In Fig. 1 ist ein Querschnitt eines erfindungsgemäßen Trägers 1 dargestellt: Der Träger 1 ist aus einem Betonfertigteil hergestellt und weist einen Obergurt 2 und einen Untergurt 3 auf. Obergurt 2 und Untergurt 3 sind mittels Stegen 4 miteinander verbunden und bilden einen Hohlraum 5. Zum Einstieg von Inspektionspersonal oder zum Verlegen von Leitungen in dem Hohlraum 5 ist eine Öffnung 10 vorgesehen. Pro Träger 1 dient mindestens ein, vorzugsweise mehrere Öffnungen 10 für die einfache Zugänglichkeit des Hohlraums 5. Ist eine große Anzahl von Öffnungen 10 vorgesehen, so kann dies zu einer deutlichen Reduzierung des Betonverbrauchs und somit zu einer kostengünstigen Herstellung des Trägers 1 führen.

Die Stege 4 sind in Bezug auf den Obergurt 2 und Untergurt 3 trapezförmig angestellt. Hierdurch wird eine noch bessere Abstützung des Trägers 1 und somit Steifigkeit des Trägers 1 im Vergleich zum Stand der Technik erzielt. Der Träger wird durch diese Gestaltung äußerst verwindungssteif und gewährleistet somit einen zuverlässigen und störungsfreien Betrieb des Fahrzeugs.

Zwischen Obergurt 2 und Untergurt 3 ist ein Lichtraum 6 ausgebildet, in welchem die Führungsteile des Magnetschwebebahnfahrzeuges ihren Platz finden. Zur Führung des Fahrzeugs dienen die Funktionselemente 7, welche an beiden Außenseiten des Obergurtes 2 angeordnet sind. Die Funktionselemente 7 werden von dem Fahrzeug umgriffen, wobei sich der untere Teil des Fahrzeugs im Bereich der Statoren in dem Lichtraum 6 befindet. Durch den gleichbleibenden Querschnitt des Trägers 1, welcher auch nicht durch Halterungen oder Lagerungen des .Trägers 1 gestört wird, ist ein strömungsgünstiger, luftstoßfreier Betrieb des Fahrzeugs ermöglicht.

Der Träger 1 ist im vorliegenden Beispiel auf Lagerungen 8 und dem Pfeiler 9 angeordnet. Der Pfeiler 9 wird dabei im Bereich der strömungsrelevanten Zonen weitgehend vollständig durch den Untergurt 3 des Trägers 1 abgedeckt und bewirkt somit keine Störung der Abströmung der durch das Fahrzeug verdrängten Luft.

Die erfindungsgemäße Gestaltung des Trägers 1 weist neben den oben erwähnten Vorteilen eine besonders hohe Quersteifigkeit und somit einen komfortablen und zuverlässigen Betrieb des Fahrzeuges auf. Insbesondere durch die Gestaltung, bei welcher der Untergurt 3 breiter ausgebildet ist als der Obergurt 2 wird eine besonders hohe Standfestigkeit des Trägers 1 gewährleistet. Der im Vergleich zum Stand der Technik erhöhte Materialverbrauch bei der Herstellung des Trägers 1 wird durch die strömungsgünstigere und dadurch energiesparende Fahrt des Fahrzeuges kompensiert.

Durch die Gestaltung, insbesondere des Untergurtes 3, bei welcher die Oberseite des Untergurts 3 abgeschrägt ausgebildet ist, wird über die übrige Gestaltung des Trägers hinaus ein günstiges Abströmen der Luft von dem Träger 1 bewirkt. Der Pfeiler 9 wird somit ebenfalls umströmt und wirkt sich kaum auf das Abströmen der verdrängten Luft aus.

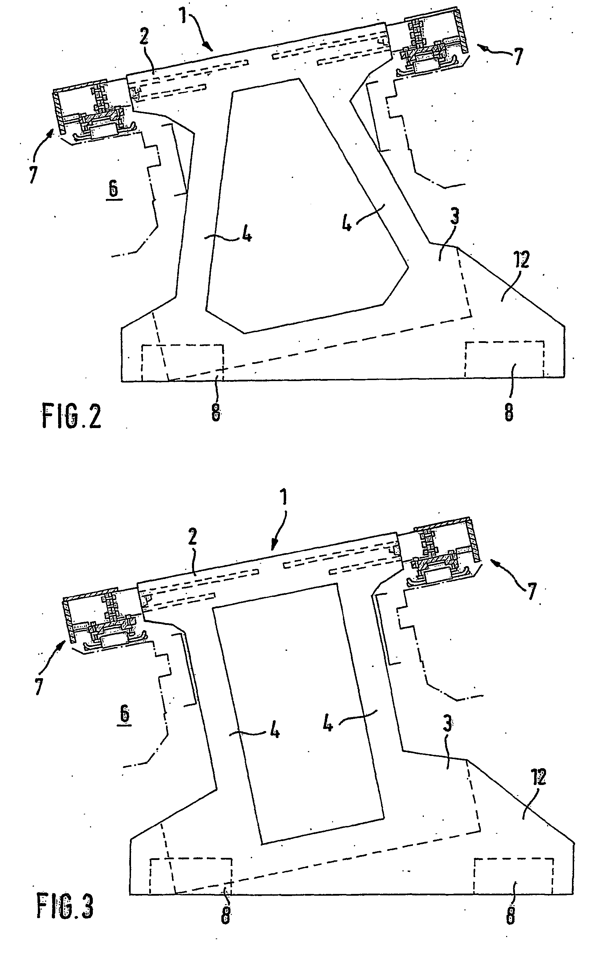

In Figur 2 ist ein weiterer Träger 1 dargestellt, weicher dem Träger 1 der Figur 1 ähnlich ist. Der Träger 1 ist in einer Überhöhung dargestellt, was bedeutet, daß für einen bogenförmigen Fahrweg die beiden Funktioriselemente 7 eine unterschiedliche Höhe aufweisen. Hierdurch wird die Kurvenfahrt für das Magnetschwebefahrzeug schneller und komfortabler möglich. Die Überhöhung wird dadurch bewerkstelligt, daß der Träger 1 nicht direkt auf den Lagerungen 8 aufsitzt, sondern, daß Auflagerkonsolen 12 vorgesehen sind, welche die Überhöhung des Trägers 1 bewirken. Der Pfeiler 9 sowie die darauf angeordneten Lagerungen 8 wirken somit direkt mit den Auflagerkonsolen 12 zusammen und nur indirekt mit dem Träger 1. Dies hat den Vorteil, daß die Herstellung der Pfeiler 9 sowie der Lagerungen 8 unabhängig davon erfolgen kann, ob der Fahrweg bogenförmig verläuft oder geradlinig. Den Ausgleich der Überhöhung bewerkstelligt allein die Auflagerpratze 12. Alternativ kann allerdings auch vorgesehen sein, daß der Pfeiler 8 bereits die Überhöhung beinhaltet und somit die Lagerung des Trägers 1 im Bogen in gleicher Weise erfolgt wie im geraden Stück.

In Figur 3 ist ein gegenüber den Figuren 1 und 2 abgewandelter Träger 1 dargestellt. Auch hier ist die Überhöhung des Trägers für eine Bogenfahrt gezeigt. Der Träger 1 besteht im wesentlichen aus einem rechteckigen Querschnitt mit einem überragenden Ober- und Untergurt 2,3. Auch hier ist durch die Gestaltung des Trägers 1 darauf geachtet, daß Strömungsstöße bei der Überfahrt mit dem Magnetschwebefahrzeug vermieden werden. Die von dem Fahrzeug verdrängte Luft wird über die Gestaltung des Trägers 1 vom dem Träger 1 abgeführt und bewirkt damit einen komfortablen Fahrbetrieb des Fahrzeugs. Für eine derartige Gestaltung des Trägers 1 insbesondere im Bereich seiner Stege 4 ist der Lichtraum 6 für das Fahrzeug besonders strömungsgünstig gestaltet. Der Spalt zwischen Fahrzeug und Träger 1 ist über die Höhe weitgehend gleichbleibend, so daß auch hier eine strömungstechnisch günstige Führung des Fahrzeuges ermöglicht wird.

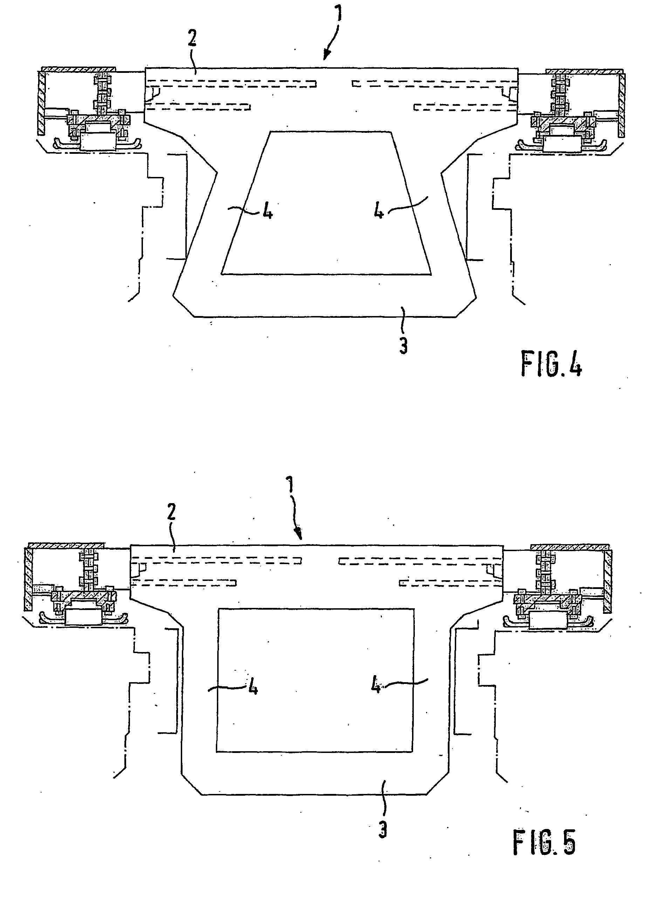

In Figur 4 ist ein abgewandelter Träger 1 dargestellt. Dieser Träger 1 ist deutlich niedriger, als die zuvor gezeigten Träger ausgeführt. Dies ist dadurch möglich, daß der Stützenabstand, in weichem dieser Träger 1 verbaut wird, wesentlich kürzer gewählt wird. Es hat sich herausgestellt, daß insbesondere für die Kurvenfahrt, bei welcher der Träger 1 bzw. die Befestigungskonsolen der Funktionselemente 7 bearbeitet werden müssen, wesentlich günstiger erfolgen kann, wenn die einzelnen Träger 1 kürzer gestaltet sind. Das Bearbeitung am einzelnen Träger ist aufgrund der kürzeren Sehne, welche der Träger 1 in dem Fahrwegsbogen einnimmt, wesentlich schneller und genauer durchführbar. Zudem ist durch den kürzeren Stützenabstand bei gleicher Steifigkeit des Trägers 1 eine geringere Bauhöhe erforderlich, wodurch auch darüber hinaus noch Material gegenüber der Verwendung gleicher Träger 1 wie bei den geraden Stücken eingespart werden kann.

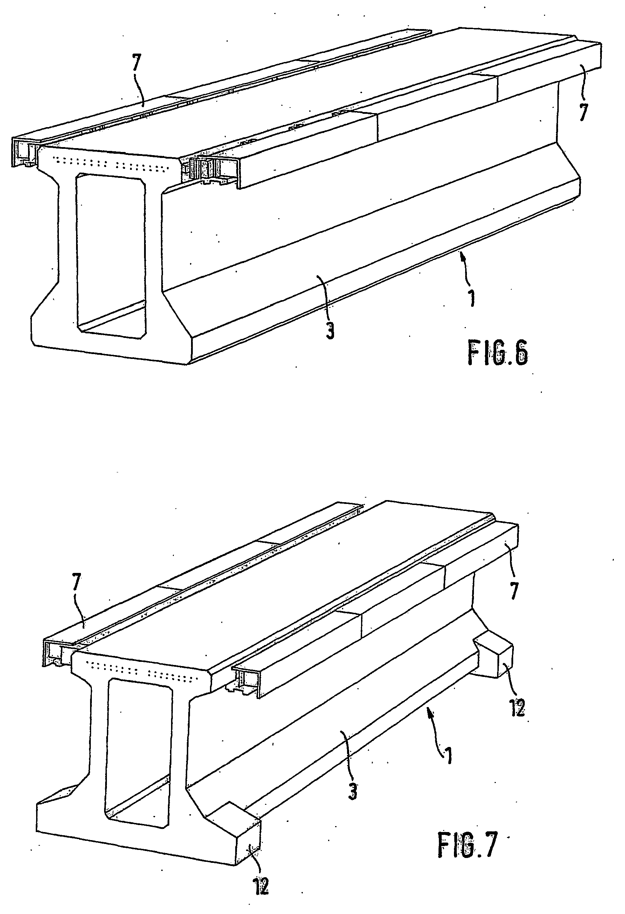

Während der Träger gemäß Figur 4 in seiner Grundform dem Träger der. Figuren 1 und 2 entspricht, ist in einem weiteren Ausführungsbeispiel der Figur 5 ein Träger der Grundform des Trägers der Figur 3 dargestellt. Es bietet sich an, daß Träger der Figur 3 und 5 miteinander kombiniert werden, und daß Träger der Figuren 1 oder 2 und 4 miteinander kombiniert werden. Der Lichtraum 6 ist dann für das Fahrzeug jeweils im wesentlichen gleich, so daß ähnliche Strömungsverhältnisse gegenüber dem Fahrzeug sowohl bei der Geradeausfahrt, als auch in der Kurvenfahrt vorliegen.

In den Figuren 6 und 7 sind perspektivische Darstellungen von erfindungsgemäßen Trägern 1 dargestellt, welche besonders strömungsgünstig ausgebildet sind. In Figur 6 ist ein Träger 1 dargestellt, welcher über seine gesamte Länge einen gleichbleibenden Querschnitt aufweist. Luftstöße auf das Fahrzeug durch Querschnittsänderungen des Trägers 1 werden dadurch vermieden. Die Auflagerkonsolen 12 bei Figur 7 sind dabei tief am Träger 1 angeordnet um die durch das überfahrende Fahrzeug erzeugte Luftströmung gut abführen zu können bzw. nicht mehr auf das Fahrzeug auswirken zu lassen.

Der Träger 1 kann auch derart ausgebildet sein, daß sein Hohlraum 5 unten offen ist. Der Untergurt 3 ist dabei zweigeteilt. Die Öffnung kann durch den kompletten Träger verlaufen oder auch unterbrochen sein. Hierdurch werden insbesondere Vorteile bei der Herstellung des Trägers erzielt, da die Entformung des Trägers sehr einfach durchführbar ist. Eine Versteifung eines solchen Trägers kann mittels Bodenplatten, die gleichzeitig oder nachträglich eingesetzt werden können oder mittels Schotten erzielt werden. Anstelle des Trägers mit einem Hohlraum kann dieser auch aus Vollmaterial ausgeführt werden. Dies ist insbesondere vorteilhaft, wenn der Träger auf Brücken oder Primärbauwerken eingesetzt wird und/oder die Trägerlängen kürzer als auf üblichen Trassierungen sind.

Die Erfindung ist nicht auf das dargestellte Ausführungsbeispiel beschränkt. Auch andere Trägerformen, weiche die durch das Fahrzeug verdrängte Luft günstig abströmen lassen, im wesentlichen keine Strömungsstöße beim Passieren des Fahrzeuges an den Pfeilern bewirken und unter den Wortlaut der Ansprüche fallen, sind Gegenstand der Erfindung.

## Patentansprüche

1. Träger für ein spurgeführtes Hochgeschwindigkeitsfahrzeug, insbesondere eine Magnetschwebebahn, wobei der Träger (1) einen Obergurt (2) und einen Untergurt (3) aufweist; in Abständen auf Pfeilern (9) gelagert ist, seitlich an den Außenseiten des Obergurtes (2) Funktionselemente (7) zum Führen des Fahrzeuges angeordnet sind und in Längsrichtung des Trägers (1) gesehen keine Querschnittsveränderungen des Trägers (1) vorgesehen sind, so daß die Außenflächen des Trägers (1) in Bezug auf das Fahrzeug strömungsgünstig ausgebildet sind, **dadurch gekennzeichnet, daß** der Untergurt (3) des Trägers (1) quer zur Längsrichtung des Trägers (1) eine Breite aufweist, welche die Pfeiler (9) strömungstechnisch überdeckt und **dadurch** die bei einer Überfahrt des Pfeilers (9) von dem Fahrzeug verdrängte Luft gleichmäßig von dem Träger (1) abströmt.

2. Träger für ein spurgeführtes Hochgeschwindigkeitsfahrzeug nach Anspruch 1, **dadurch gekennzeichnet, daß** der Träger (1) einen Hohlraum (5) aufweist.

3. Träger für ein spurgeführtes Hochgeschwindigkeitsfahrzeug nach einem der vorherigen Ansprüche, **dadurch gekennzeichnet, daß** der Träger (1) eine den Pfeiler (9) überdeckende und/oder strömungsgünstig angeordnete oder gestaltete Auflagerkonsole (12) aufweist.

4. Träger für ein spurgeführtes Hochgeschwindigkeitsfahrzeug nach einem der vorherigen Ansprüche, **dadurch gekennzeichnet, daß** der Träger (1) wenigstens eine Öffnung (10) zur Inspektion des Hohlraumes des Trägers (1) aufweist.

5. Träger für ein spurgeführtes Hochgeschwindigkeitsfahrzeug nach einem der vorherigen Ansprüche, **dadurch gekennzeichnet*,* daß** in dem Hohlraum (5) des Trägers (1) für den Betrieb des Fahrzeuges abhängige und unabhängige Versorgungsleitungen und/oder Kommunikationsleitungen verlegt sind.

6. Träger für ein spurgeführtes Hochgeschwindigkeitsfahrzeug nach einem der vorherigen Ansprüche, **dadurch gekennzeichnet, daß** der Träger (1) einen Lichtraum (6) zur Aufnahme der die Funktionselemente (7) umgreifenden Führungselemente des Fahrzeugs aufweist.

7. Träger für ein spurgeführtes Hochgeschwindigkeitsfahrzeug nach einem der vorherigen Ansprüche, **dadurch gekennzeichnet, daß** an dem Untergurt (3) und/oder der Auflagerkonsole Lagerelemente (8) zur Lagerung des Trägers (1) auf dem Pfeiler (9) angeordnet sind.

8. Träger für ein spurgeführtes Hochgeschwindigkeitsfahrzeug nach einem der vorherigen Ansprüche, **dadurch gekennzeichnet, daß** der Träger (1) aus Beton, insbesondere einem Betonfertigteil hergestellt ist.

9. Träger für ein spurgeführtes Hochgeschwindigkeitsfahrzeug nach einem der vorherigen Ansprüche, **dadurch gekennzeichnet, daß** der Untergurt (3) breiter als der Obergurt (2) ist.

10. Träger für ein spurgeführtes Hochgeschwindigkeitsfahrzeug nach einem der vorherigen Ansprüche, **dadurch gekennzeichnet, daß** der Träger (1) ein Schott und/oder Vouten aufweist.

11. Träger für ein spurgeführtes Hochgeschwindigkeftsfahrzeug nach einem der vorherigen Ansprüche, **dadurch gekennzeichnet, daß** der Träger (1) in Kurvenbereichen der Fahrbahn eine Raumkurve abbildet, indem der Obergurt (2) des Trägers (1) um dessen Längsachse verdreht ausgebildet ist und durch Verlängerung und/oder Verkürzung der Kragarme ein Radius gebildet wird.

12. Träger für ein spurgeführtes Hochgeschwindigkeitsfahrzeug nach einem der Ansprüche 1-10 **dadurch gekennzeichnet, daß** der Träger (1) in Kurvenbereichen der Fahrbahn eine Raumkurve abbildet, indem Befestigungskonsolen der Funktionselemente (7) im Verlauf der Längsachse des Trägers (1) höhenversetzt angeordnet sind und durch Verlängerung und/oder Verkürzung der Befestigungskonsolen ein Radius gebildet wird.

13. Träger für ein spurgeführtes Hochgeschwindigkeitsfahrzeug nach einem der Ansprüche 2-12, **dadurch gekennzeichnet, daß** der Hohlraum (5) des Trägers (1) unten offen ist, wodurch der Untergurt (3) zweiteilig ausgebildet ist.

14. Träger für ein spurgeführtes Hochgeschwindigkeitsfahrzeug nach einem der Ansprüche 2-13, **dadurch gekennzeichnet, daß** der Hohlraum (5) des Trägers (1) Schotten aufweist zur Verstärkung des Trägers (1).

## Claims

1. A beam for a track guided high speed vehicle, especially a magnetically levitated vehicle, wherein the beam (1) having an upper flange (2) and a lower flange (3) is supported at spatial intervals on piers (9) and on the outside of said upper flange (2), functional elements (7) for the guidance of a vehicle are placed and as seen in the longitudinal direction of the beam (1) no cross-sectional alterations of the beam (1) are provided, so that the outer surface of the beam (1) in relation to the vehicle is designed to be airflow favorable, therein **characterized, in that** the lower flange (3) of the beam (1) transversely to the longitudinal direction of the beam (1) has a width that covers the piers (9) regarding the airflow so that the air that is displaced by the vehicle crossing the pier (9) flows off the beam (1) evenly.

2. A beam for a track guided high speed vehicle in accord with Claim 1, therein **characterized, in that** the beam (1) has a hollow space (5).

3. A beam for a track guided high speed vehicle, in accord with one of the foregoing claims, therein **characterized, in that** the beam (1) possesses a load bearing console (12) which covers the piers (9) and/or is placed or formed in an airflow favorable manner.

4. A beam for a track guided high speed vehicle, in accord with one of the foregoing claims, therein **characterized, in that** the beam (1) has at least one opening (10) for inspection of the hollow space of the beam (1).

5. A beam for a track guided high speed vehicle, in accord with one of the foregoing claims, therein **characterized, in that** within the hollow space (5) of the beam (1), are laid supply lines and/or communication lines which are dependent on and/or independent of the operation of a vehicle.

6. A beam for a track guided high speed vehicle, in accord with one of the foregoing claims, therein **characterized, in that** the beam (1) allows for a clearance space (6) for the reception of the guide elements 7 which engage the functional elements of a vehicle.

7. A beam for a track guided high speed vehicle, in accord with one of the foregoing claims, therein **characterized, in that** on the under flange (3), and/or on the load bearing console, support elements (8) for supporting the beam (1) are placed on the piers (9)

8. A beam for a track guided high speed vehicle, in accord with one of the foregoing claims, therein **characterized, in that** the beam (1) is made of concrete, especially from a precast concrete component.

9. A beam for a track guided high speed vehicle, in accord with one of the foregoing claims, therein **characterized, in that** the lower flange (3) is broader than the upper flange (2).

10. A beam for a track guided high speed vehicle, in accord with one of the foregoing claims, therein **characterized, in that** that the beam (1) possesses a bulkhead and/or a haunches.

11. A beam for a track guided high speed vehicle, in accord with one of the foregoing claims, therein **characterized, in that** the beam (1), in curved areas of the travel-way, forms a space curve, while the upper flange (2) of the beam (1) is designed to be rotated about its longitudinal axis and by lengthening and/or shortening of the cantilever arm a radius is constructed.

12. A beam for a track guided high speed vehicle, in accord with one of the claims 1-10, therein **characterized, in that** the beam (1) in curve areas of the travel-way forms a spatial curve, wherein fastening consoles of the functional elements (7) in the longitudinal run of the beam (1) are offset as to height and by means of the lengthening and/or the shortening of the fastening consoles a radius is formed.

13. A beam for a track guided high speed vehicle, in accord with one of the claims 2-12, therein **characterized, in that** the hollow space (5) of the beam (1) is open at the bottom, so that the lower flange (3) is constructed in two parts.

14. A beam for a track guided high speed vehicle, in accord with one of the claims 2-13, therein **characterized, in that** the hollow space (5) of the beam (1) possesses bulkheads for the reinforcement of the beam (1).

## Revendications

1. Support pour un véhicule de transport à grande vitesse guidé, particulièrement un train à suspension magnétique, sachant que le support (1) comporte une membrure supérieure (2) et une membrure inférieure (3), qu'il repose sur des piliers (9) distancés l'un de l'autre, que des éléments fonctionnels (7) sont disposés latéralement sur les faces extérieures de la membrure supérieure (2) pour guider le véhicule et des modifications de la section du support (1) ne sont pas prévues dans le sens de la longueur, si bien que les surfaces extérieures du support (1) se présentent sous forme favorable à l'écoulement par rapport au véhicule, **caractérisé en ce que** la membrure inférieure (3) du support (1) présente dans le sens perpendiculaire au sens longitudinal du support (1) une largeur qui recouvre les piliers (9) de manière à tenir compte de la technique de circulation des fluides, permettant ainsi à l'air déplacé par un véhicule lors du passage sur les piliers (9) de s'écouler uniformément du support (1).

2. Support pour un véhicule de transport à grande vitesse guidé selon la revendication 1, **caractérisé en ce que** le support (1) comporte un espace creux (5).

3. Support pour un véhicule de transport à grande vitesse guidé selon l'une quelconque des revendications précédentes, **caractérisé en ce que** le support (1) comporte une console d'appui (12) recouvrant les piliers (9) et/ou disposée ou formée de manière à favoriser l'écoulement.

4. Support pour un véhicule de transport à grande vitesse guidé selon l'une quelconque des revendications précédentes, **caractérisé en ce que** le support (1) comporte au moins une ouverture (10) permettant l'inspection de l'espace vide du support (1).

5. Support pour un véhicule de transport à grande vitesse guidé selon l'une quelconque des revendications précédentes, **caractérisé en ce que** des lignes d'alimentation et/ou de communication dépendantes et indépendantes pour l'exploitation du véhicule sont posées dans l'espace creux (5) du support (1).

6. Support pour un véhicule de transport à grande vitesse guidé selon l'une quelconque des revendications précédentes, **caractérisé en ce que** le support (1) comporte un gabarit intérieur (6) servant à accueillir les éléments de guidage du véhicule, lesquels enveloppent les éléments fonctionnels (7).

7. Support pour un véhicule de transport à grande vitesse guidé selon l'une quelconque des revendications précédentes, **caractérisé en ce que** des éléments d'appui (8) servant au logement du support (1) sur le pilier (9) sont disposés à la membrure inférieure (3) et/ou à la console d'appui.

8. Support pour un véhicule de transport à grande vitesse guidé selon l'une quelconque des revendications précédentes, **caractérisé en ce que** le support (1) est réalisé en béton, qu'il est particulièrement un élément préfabriqué en béton.

9. Support pour un véhicule de transport à grande vitesse guidé selon l'une quelconque des revendications précédentes, **caractérisé en ce que** la membrure inférieure (3) est plus large que la membrure supérieure (2).

10. Support pour un véhicule de transport à grande vitesse guidé selon l'une quelconque des revendications précédentes, **caractérisé en ce que** le support (1) comporte une cloison et/ou des voûtes.

11. Support pour un véhicule de transport à grande vitesse guidé selon l'une quelconque des revendications précédentes, **caractérisé en ce que** le support (1) dessine dans les zones de virage de la voie de circulation une courbe en trois dimensions en ce sens que la membrure supérieure (2) du support (1) se présente sous forme en rotation autour de l'axe longitudinal du support (1) et/ou qu'un rayon est formé par raccourcissement des bras en porte-à-faux.

12. Support pour un véhicule de transport à grande vitesse guidé selon l'une quelconque des revendications 1 à 10, **caractérisé en ce que** le support (1) dessine dans les zones de virage de la voie de circulation une courbe en trois dimensions en ce sens que des consoles de fixation des éléments fonctionnels (7) sont disposées en décalage vertical sur l'étendue de l'axe longitudinal du support (1) et qu'un rayon est formé par allongement et/ou raccourcissement des consoles de fixation.

13. Support pour un véhicule de transport à grande vitesse guidé selon l'une quelconque des revendications 2 à 12, **caractérisé en ce que** l'espace vide (5) du support (1) est ouvert au bas, faisant à ce que la membrure inférieure (3) se présente sous forme à deux parties.

14. Support pour un véhicule de transport à grande vitesse guidé selon l'une quelconque des revendications 2 à 13, **caractérisé en ce que** l'espace vide (5) du support (1) comporte des cloisons servant au renforcement du support (1).
